(19) Europäisches Patentamt / European Patent Office / Office européen des brevets

(11) **EP 2 693 371 A2**

(12) **EUROPEAN PATENT APPLICATION**

(43) Date of publication:
**05.02.2014 Bulletin 2014/06**

(51) Int Cl.:
***G06K 19/077*** *(2006.01)*

(21) Application number: **12275160.5**

(22) Date of filing: **23.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.07.2012 KR 20120084096**

(71) Applicant: **Samsung Electro-Mechanics Co., Ltd Suwon, Gyunggi-Do (KR)**

(72) Inventor: **Kim, Su Jong Gyunggi-do (KR)**

(74) Representative: **Potter Clarkson LLP The Belgrave Centre Talbot Street Nottingham, NG1 5GG (GB)**

(54) **Electronic tag device for electronic shelf label system and connection method thereof**

(57)    There are provided an electronic tag device for an electronic shelf label (ESL) system and a connection method thereof. The electronic tag device for the electronic shelf label system according to an embodiment of the present invention includes a wireless communications unit transmitting and receiving an RF signal according to a previously set communications protocol; a control unit calculating a receiving sensitivity for each of a plurality of relays by scanning the plurality of relays communicating via the wireless communications unit to select a personal area network (PAN) based on PAN information and receiving sensitivity information regarding each of the plurality of relays, and performing a connection by selecting one of the relays included in the selected PAN based on the receiving sensitivity; and a memory storing the PAN information and receiving sensitivity information regarding each of the plurality of relays according to the control unit.

FIG. 1

EP 2 693 371 A2

**Description**

**CROSS-REFERENCE TO RELATED APPLICATIONS**

This application claims the priority of Korean Patent Application No. 10-2012-0084096 filed on July 31, 2012, in the Korean Intellectual Property Office, the disclosure of which is incorporated herein by reference.

**BACKGROUND OF THE INVENTION**

**Field of the Invention**

The present invention relates to an electronic tag device for an electronic shelf label (ESL) system capable of being applied to a display stand for goods and a connection method thereof.

**Description of the Related Art**

Generally, an electronic shelf label (ESL) system is a system that may be installed in a display stand for goods and may automate information about the goods displayed thereon. In the ESL system, thousands of tags (price display terminals) configure a wireless network to allow wireless communications with a centralized relay (gateway (GW)) to be performed.

Generally, the ESL system is configured of complicated network devices (a server, a gateway, a TAG) and in the case that the ESL system is configured of several upper server systems in a system field, tags corresponding to a lower network device need to be connected to individual servers. That is, a personal area network (PAN) is required to connect a relay device forming a lower network and the tags.

In the ESL system according to the related art, when the tags are connected to the network, there is a need to perform a scanning process, searching surrounding relay devices. Such a scanning process may include a passive scanning and an active scanning.

For example, when two of a total of six relay devices are included in a single PAN, individual tags scan communicable surrounding relay devices. In this case, the individual tags may scan a greater amount relays according to the installation number and propagation environment of the relay devices.

Further, the electronic tags may detect receiving sensitivity of the scanned relay devices to search a relay device having excellent receiving sensitivity and attempt to connect to the searched relay device.

During the connection attempt, the electronic tag may receive a response result from the relay device and a server as a response packet so as to determine a possibility of connection. In detail, when the electronic tag has no connection permission, the electronic tag may search another relay device having secondarily excellent receiving sensitivity to request a connection attempt.

However, during such a tag connection process according to the related art, the tag repeatedly performs a connection corresponding to the number of scanned relay devices. Thus, in a system having a plurality of relay devices, when the finally searched relay device is a connection permissible relay device, the tag needs to repeatedly perform the connection attempt corresponding to the total number of relay devices, such that a connection time may be relatively long and power consumed during an connection attempt may be increased.

Patent Document 1 relates to a wireless Internet access method and a mobile terminal using the same and does not disclose technical matters related to selectively selecting a PAN and a relay device based on receiving sensitivity.
[Related Art Document]
(Patent Document 1) Korean Patent Laid-Open Publication No. 10-2010-0102834

**SUMMARY OF THE INVENTION**

An aspect of the present invention provides an electronic tag device for an electronic shelf label system and a connection method thereof capable of reducing time consumed before a connection with a relay, and a connection method thereof. According to an aspect of the present invention, there is provided an electronic tag device, including: a wireless communications unit transmitting and receiving an RF signal according to a previously set communications protocol; a control unit calculating a receiving sensitivity for each of a plurality of relays by scanning the plurality of relays communicating via the wireless communications unit to select a personal area network (PAN) based on PAN information and receiving sensitivity information regarding each of the plurality of relays, and performing a connection by selecting one of the relays included in the selected PAN based on the receiving sensitivity; and a memory storing the PAN information and receiving sensitivity information regarding each of the plurality of relays according to the control unit.

The control unit may average receiving sensitivities for a plurality of PANs to obtain average receiving sensitivity values and selects a PAN having an excellent average receiving sensitivity value among the plurality of PANs.

The control unit may select a relay having an excellent receiving sensitivity among the plurality of relays included in the selected PAN.

When no connection is permitted during connection attempt to the selected relay, the control unit may exclude the selected relay and reselect a PAN among a plurality of PANs and a relay included in the selected PAN .

The electronic tag device may further include a display unit displaying information according to a control of the control unit.

According to another aspect of the present invention, there is provided a connection method of an electronic tag device, including: scanning a plurality of relays that are communicable; obtaining a receiving sensitivity for each of the plurality of relays; selecting a PAN having an excellent receiving sensitivity based on PAN information and receiving sensitivity information regarding each of the plurality of relays; selecting a relay having an excellent receiving sensitivity among the relays included in the selected PAN; and performing a connection to the selected relay.

The obtaining of a receiving sensitivity for each of the plurality of relays may include: detecting a receiving sensitivity for each of the plurality of relays; and storing the detected receiving sensitivity together with the PAN information regarding each of the plurality of relays.

In the selecting of a PAN having an excellent receiving sensitivity based on PAN information and receiving sensitivity information regarding each of the plurality of relays, receiving sensitivities for a plurality of PANs may be averaged to obtain average receiving sensitivity values and a PAN having an excellent average receiving sensitivity value among the plurality of PANs may be selected.

In the selecting of a relay having an excellent receiving sensitivity among the relays included in the selected PAN, a relay having an excellent receiving sensitivity among the plurality of relays included in the selected PAN may be selected.

The connection method may further include: excluding the selected relay and proceeding to the selecting of a PAN having an excellent receiving sensitivity based on PAN information and receiving sensitivity information regarding each of the plurality of relays, when no connection is permitted during connection attempt to the selected relay

## BRIEF DESCRIPTION OF THE DRAWINGS

The above and other aspects, features and other advantages of the present invention will be more clearly understood from the following detailed description taken in conjunction with the accompanying drawings, in which:

FIG. 1 is a schematic configuration diagram of an electronic shelf label system according to an embodiment of the present invention;
FIG. 2 is a block diagram of an electronic tag device for the electronic shelf label system according to the embodiment of the present invention; and
FIG. 3 is a flow chart showing a connection method of the electronic tag device for an electronic shelf label system according to the embodiment of the present invention.

## DETAILED DESCRIPTION OF THE EMBODIMENTS

Hereinafter, embodiments of the present invention will be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the shapes and dimensions of elements may be exaggerated for clarity, and the same reference numerals will be used throughout to designate the same or like elements.

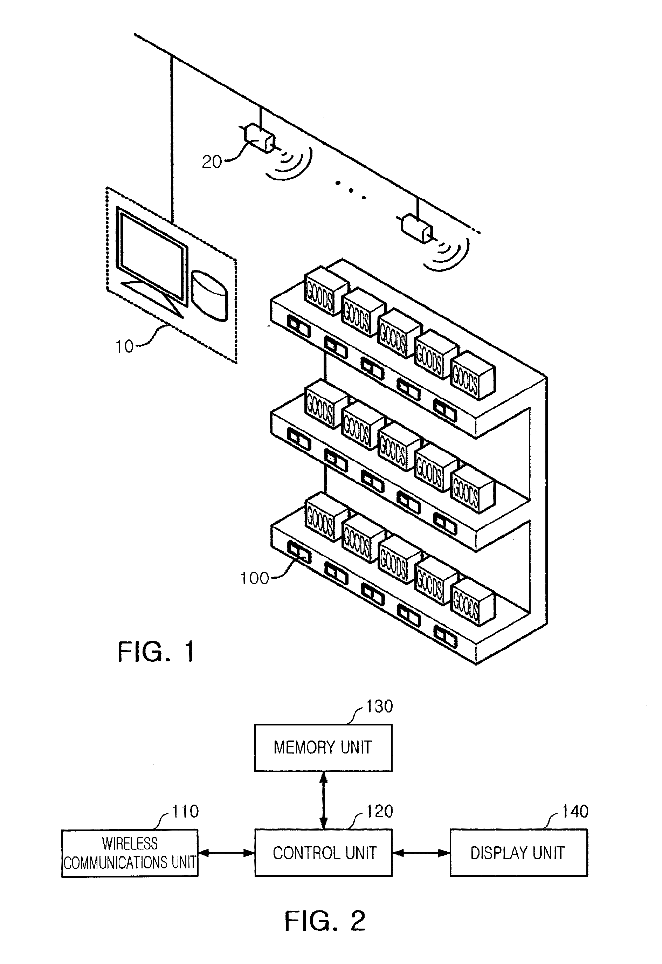

FIG. 1 is a schematic configuration diagram of an electronic shelf label system according to an embodiment of the present invention.

Referring to FIG. 1, an electronic shelf label system according to an embodiment of the present invention may include a server 10, a relay 20, and electronic tag devices 100.

The server 10 may manage state information on a plurality of the electronic tag devices present within a network to which the server 10 pertains.

The relay 20 may perform a wired or wireless conversion function between the server 10 and the electronic tag devices 100.

That is, the relay 20 may convert a wired signal from the server 10 into a wireless signal and then transmit the wireless signal to the electronic tag devices 100, while the relay 20 may convert a wireless signal from the electronic tag devices 100 into a wired signal and then transmit the wired signal to the server 10.

FIG. 2 is a block diagram of an electronic tag device for the electronic shelf label system according to the embodiment of the present invention.

Referring to FIG. 2, the electronic tag device for an electronic shelf label system according to the embodiment of the present invention may include a wireless communications unit 110 transmitting and receiving an RF signal according to a previously set communications protocol, a control unit 120 calculating a receiving sensitivity for each of a plurality of relays by scanning the plurality of relays communicating via the wireless communications unit 110 to select a personal area network (PAN) based on PAN information and receiving sensitivity information regarding each of the plurality of relays, and performing a connection by selecting one of the relays included in the selected PAN based on the receiving sensitivity, and a memory 130 storing the PAN information and receiving sensitivity information regarding each of the plurality of relays according to the control unit 120.

In this configuration, the wireless communications unit 110 may transmit and receive the RF signal according to the previously set communications protocol.

That is, the wireless communications unit 110 may receive a wireless RF signal from the relay 20, and may convert a signal from the control unit 120 into an RF signal to transmit a wireless RF signal to the relay 20.

The control unit 120 may scan the plurality of relays that are communicable via the wireless communications unit 110 and may calculate the receiving sensitivity for each of the plurality of scanned relays. In addition, the control unit 120 may store the PAN information and the receiving sensitivity information regarding each of the plurality of relays. In addition, the control unit 120 may select a PAN based on PAN information and receiving sensitivity information, select one of the relays included in the selected PAN based on the receiving sensitivity, and perform a connection to the selected relay.

In addition, in the memory 130, the PAN information and receiving sensitivity information regarding each of the plurality of relays may be stored according to the control unit.

Here, the receiving sensitivity may be a received signal strength indication (RSSI) referring to a signal level of a received signal.

Further, referring to FIG. 2, the control unit 120 may average receiving sensitivities for a plurality of PANs to obtain average receiving sensitivity values and select a PAN having an excellent average receiving sensitivity value among the plurality of PANs. The control unit 120 may select a relay having an excellent receiving sensitivity among the plurality of relays included in the selected PAN. The control unit 120 may exclude the selected relay and reselect a PAN among the plurality of PANs and a relay included in the selected PAN when no connection is permitted during connection attempt to the selected relay.

In this case, the control unit 120 may average the receiving sensitivities for a plurality of PANs to obtain average receiving sensitivity values depending on the following Expression 1 and select a PAN having an excellent average receiving sensitivity value among the plurality of PANs.

[Expression 1]

$$\text{Average receiving sensitivity value of PANs} = \frac{\text{Receiving Sensitivity Sum of all PANs}}{\text{Total Number of PANs}}$$

Next, the control unit 120 may select a relay having an excellent receiving sensitivity among the plurality of relays included in the selected PAN.

For example, in the case in which two PANs, that is, PAN1 and PAN2 are present and PAN1 and PAN2 respectively include two relays, when receiving sensitivities for respective first and second relays of the PAN1 are set to be 10 and 12 and receiving sensitivities for respective third and fourth relays of the PAN2 are set to be 8 and 12, an average receiving sensitivity value of the PAN1 is set to be 11 (11 = (10 + 12)/2) and an average receiving sensitivity value of the PAN2 is set to be 10 (10 = (8 + 12)/2).

In this case, among the PAN1 and the PAN2, the PAN1 having an excellent average receiving sensitivity value may be selected.

Further, in the selected PAN1, the receiving sensitivities for respective first and second relays are set to be 10 and 12, and therefore, the second relay may be selected by the method as described above.

After the PAN1 and the second relay are selected as in the manner described above, the control unit 120 attempts a connection to the selected relay. When no connection is permitted during connection attempt to the selected relay, the control unit may exclude the selected relay and reselect a PAN among the plurality of PANs and a relay included in the selected PAN.

In addition, referring to FIG. 2, the electronic tag device may further include a display unit 140 that displays information according to a control of the control unit 120.

In this case, the display unit 140 may display information according to the control of the control unit 120.Here, information displayed by the display unit 140 may be goods' names, goods' price information, and the like.

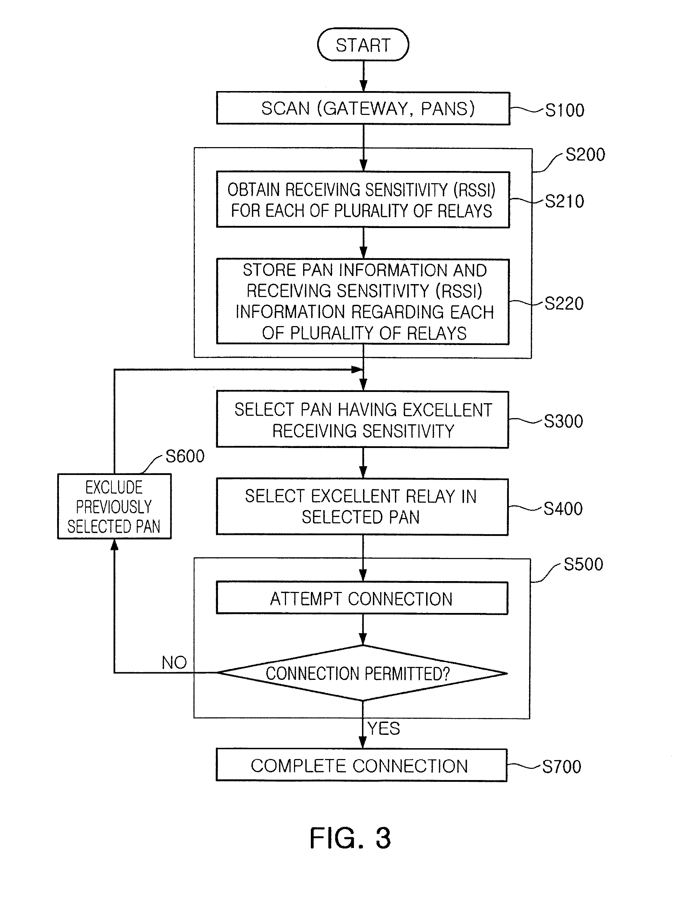

FIG. 3 is a flow chart showing a connection method of an electronic tag device for an electronic shelf label system according to the embodiment of the present invention.

Referring to FIGS. 1 to 3, a connection method of an electronic tag device for an electronic shelf label system according to the embodiment of the present invention may include: scanning a plurality of relays that are communicable (S100); obtaining a receiving sensitivity for each of the plurality of relays (S200) ; selecting a PAN having an excellent receiving sensitivity based on PAN information and receiving sensitivity information regarding each of the plurality of relays (S300) ; selecting a relay having an excellent receiving sensitivity among the relays included in the selected PAN (S400); and performing a connection to the selected relay (S500).

As such, the connection method may be performed by the electronic tag device shown in FIG. 1 and when it is performed as shown in FIG. 3, in the operation (S100), the electronic tag device 100 may scan a plurality of relays that are communicable.

In the operation (S200), the electronic tag device 100 may obtain a receiving sensitivity for each of the plurality of relays. Here, receiving sensitivity may be an RSSI referring to a signal level of a received signal.

In the operation (S300), the electronic tag device 100 may select a PAN having an excellent receiving sensitivity based on PAN information and receiving sensitivity information regarding each of the plurality of relays.

In the operation (S400), the electronic tag device 100 may select a relay having an excellent receiving sensivity among the relayes included in the selected PAN.

Further, in the operation (S500), the electronic tag device 100 may perform a connection to the selected relay.

In addition, referring to FIG. 3, the operation (S200) may include detecting a receiving sensitivity for each of the plurality of relays (S210) and storing the detected receiving sensitivity together with the PAN information regarding each of the plurality of relays (S220).

In this case, in the operation (S210), the receiving sensitivity for each of the plurality of relays may be detected. In addition, in the operation (S220), the detected receiving sensitivity may be stored together with the PAN information regarding each of the plurality of relays.

For example, in the case in which the relays are formed of gateways (GWs) and the PAN1, the PAN2, and a PAN3 that are three PANs are present, when each of the PAN1, PAN2, and PAN3 include two relays, the relays may be formed of GW1, GW2, GW3, GW4, GW5, and GW6 that are a total of six gateways. In this case, receiving sensitivities and PAN information regarding individual relays may be arranged in a lookup table as shown in Table 1.

[Table 1]

| GW1 | PAN1 | Receiving Sensitivity 1 |
|------|------|--------------------------|
| GW2 | PAN2 | Receiving Sensitivity 2 |
| GW3 | PAN3 | Receiving Sensitivity 3 |
| GW4 | PAN4 | Receiving Sensitivity 4 |
| GW5 | PAN5 | Receiving Sensitivity 5 |
| GW6 | PAN6 | Receiving Sensitivity 6 |

Further, referring to FIG. 3, in the operation (S300), receiving sensitivities for a plurality of PANs may be averaged to obtain average receiving sensitivity values and a PAN having an excellent average receiving sensitivity value among the plurality of PANs may be selected. In addition, in the operation (S400), a relay having an excellent receiving sensitivity among the plurality of relays included in the selected PAN may be selected.

In this case, in the operation (S300), the receiving sensitivities for the plurality of PANs are averaged to obtain the average receiving sensitivity values depending on the Expression 1 and the PANs having an excellent average receiving sensitivity value may be selected.

In addition, in the operation (S400), the relays having an excellent receiving sensitivity among the plurality of relays included in the selected PAN may be selected.

For example, as described above, in the case in which two PANs, that is, PAN1 and PAN2 are present and PAN1 and PAN2 respectively include two relays, when receiving sensitivities for respective first and second relays of the PAN1 are set to be 10 and 12 and receiving sensitivities for respective third and fourth relays of the PAN2 are set to be 8 and 12, an average receiving sensitivity value of the PAN1 is set to be 11 (11 = (10 + 12)/2) and an average receiving sensitivity value of the PAN2 is set to be 10 (10 = (8 + 12)/2).

In this case, among the PAN1 and the PAN2, the PAN1 having an excellent average receiving sensitivity value may be selected.

Further, in the selected PAN1, the receiving sensitivities for respective first and second relays are set to be 10 and 12, and therefore, the second relay may be selected.

Meanwhile, the connection method of the electronic tag device may further include excluding the selected relay and proceeding to the operation (S300), when no connection is permitted during connection attempt to the selected relay (S500, S600, and S700).

In this case, in the operations (S500, S600, and S700), the connection to the selected relay is attempted (S500), when no connection is permitted during the connection attempt, the selected relay is excluded and the operation (S300) is performed (S600), and otherwise, the connection is completed when the connection is permitted (S700).

As set forth above, according to the embodiment of the present invention, the PAN having an excellent receiving sensitivity may be first selected and then, a relay having an excellent receiving sensitivity among the relays included in the selected PAN may be selected, whereby the time consumed before connection with the relay may be reduced and accordingly, the power consumed for connection may decrease.

While the present invention has been shown and described in connection with the embodiments, it will be apparent to those skilled in the art that modifications and variations can be made without departing from the spirit and scope of the invention as defined by the appended claims.

**Claims**

1. An electronic tag device, comprising:

   a wireless communications unit transmitting and receiving an RF signal according to a previously set communications protocol;
   a control unit calculating a receiving sensitivity for each of a plurality of relays by scanning the plurality of relays communicating via the wireless communications unit to select a personal area network (PAN) based on PAN information and receiving sensitivity information regarding each of the plurality of relays, and performing a connection by selecting one of the relays included in the selected PAN based on the receiving sensitivity; and
   a memory storing the PAN information and receiving sensitivity information regarding each of the plurality of relays according to the control unit.

2. The electronic tag device of claim 1, wherein the control unit averages receiving sensitivities for a plurality of PANs to obtain average receiving sensitivity values and selects a PAN having an excellent average receiving sensitivity value among the plurality of PANs.

3. The electronic tag device of claim 1, wherein the control unit selects a relay having an excellent receiving sensitivity among the plurality of relays included in the selected PAN.

4. The electronic tag device of claim 1, wherein when no connection is permitted during connection attempt to the selected relay, the control unit excludes the selected relay and reselects a PAN among a plurality of PANs and a relay included in the selected PAN.

5. The electronic tag device of claim 1, further comprising a display unit displaying information according to a control of the control unit.

6. A connection method of an electronic tag device, the connection method comprising:

   scanning a plurality of relays that are communicable;
   obtaining a receiving sensitivity for each of the plurality of relays;
   selecting a PAN having an excellent receiving sensitivity based on PAN information and receiving sensitivity information regarding each of the plurality of relays;
   selecting a relay having an excellent receiving sensitivity among the relays included in the selected PAN; and
   performing a connection to the selected relay.

7. The connection method of claim 6, wherein the obtaining of a receiving sensitivity for each of the plurality of relays includes:

detecting a receiving sensitivity for each of the plurality of relays; and
storing the detected receiving sensitivity together with the PAN information regarding each of the plurality of relays.

8.  The connection method of claim 6, wherein in the selecting of a PAN having an excellent receiving sensitivity based on PAN information and receiving sensitivity information regarding each of the plurality of relays, receiving sensitivities for a plurality of PANs are averaged to obtain average receiving sensitivity values and a PAN having an excellent average receiving sensitivity value among the plurality of PANs is selected.

9.  The connection method of claim 6, wherein in the selecting of a relay having an excellent receiving sensitivity among the relays included in the selected PAN, a relay having an excellent receiving sensitivity among the plurality of relays included in the selected PAN is selected.

10. The connection method of claim 6, further comprising  excluding the selected relay and proceeding to the selecting of a PAN having an excellent receiving sensitivity based on PAN information and receiving sensitivity information regarding each of the plurality of relays, when no connection is permitted during connection attempt to the selected relay.

FIG. 1

FIG. 2

START

SCAN (GATEWAY, PANS) ——S100

OBTAIN RECEIVING SENSITIVITY (RSSI)
FOR EACH OF PLURALITY OF RELAYS ——S210

S200

STORE PAN INFORMATION AND
RECEIVING SENSITIVITY (RSSI)
INFORMATION REGARDING EACH
OF PLURALITY OF RELAYS ——S220

SELECT PAN HAVING EXCELLENT
RECEIVING SENSITIVITY ——S300

S600
EXCLUDE
PREVIOUSLY
SELECTED PAN

SELECT EXCELLENT RELAY IN
SELECTED PAN ——S400

S500

ATTEMPT CONNECTION

NO CONNECTION PERMITTED?

YES

COMPLETE CONNECTION ——S700

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120084096

- KR 1020100102834